# EUROPEAN PATENT APPLICATION

(11) **EP 2 819 365 A1**
(43) Date of publication of application: **31.12.2014**
(21) Application number: 13305860.2
(22) Date of filing: 24.06.2013
(51) Int. Cl.: H04L 29/06

(54) **Network traffic inspection**

(71) Applicant: ALCATEL LUCENT, 92100 Boulogne-Billancourt (FR)
(72) Inventor: Martin, Antony, 91620 Nozay (FR); Papillon, Serge, 91620 Nozay (FR)
(74) Representative: Mouney, Jérôme

(57) **Abstract**

For a traffic inspection in a telecommunication network (TN), a device receives traffic packets and executes a statistic inspection on the received traffic packets. Then the device classifies the received traffic packets as malicious or legitimate after the statistic inspection, parses the traffic packets classified as malicious to identify a protocol associated with the traffic packets, and rewrites the traffic packets classified as malicious according to a grammar associated with the identified protocol.

## Description

### FIELD OF THE INVENTION

The present invention pertains to the inspection of network traffic.

### BACKGROUND

Detection of malicious content in network traffic is a complex issue and challenging considering there is a very short time window to label the network traffic as legitimate or malicious.

Currently, there exists a rule based signature classifier system that is computationally demanding and complex. For example, building a SIP parser is a very complex task due to the wide variety in representing the information elements and the message must be entirely parsed before taking a decision.

A statistical profile-based anomaly-detection system (Machine Learning and Heuristic Approaches and Statistical Approaches) has an average accuracy (anomalous messages classified as bad and normal messages classified as good) around 95%. These systems represent solutions to detect malformed messages without parsing. These systems are good on the average, but have inherently a false positive rate which is a weak point. The false positives rate makes these systems out of consideration for in line network traffic inspection of critical services such as voice. Additionally, statistical profile-based anomaly-detection systems are getting traction because they are valuable against unknown attacks that defeat signature based systems. However, these systems are still at an academic stage, research institutes and universities looking for improved classification results. These systems provide endless classification refinement that is not deterministic and therefore is intrinsically limited.

There is a need to propose a new reaction strategy, without looking to refine the inspection results.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for for traffic inspection in a telecommunication network, a device receiving traffic packets and executing a statistic inspection on the received traffic packets, comprising the following steps in said device:
classifying the received traffic packets as malicious or legitimate after the statistic inspection,
parsing the traffic packets classified as malicious to identify a protocol associated with the traffic packets,
rewriting the traffic packets classified as malicious according to a grammar associated with identified protocol.

Advantageously, the invention offers an inspection engine with a rewriting proxy engine as a new reaction strategy, not looking to refine the inspection results till reaching a better accuracy. The invention gives the best confidence that the traffic crossing the whole system is legitimate at the end, without drastically impacting the overall performances.

In an embodiment, the grammar is selected according to the type of the identified protocol.

In an embodiment, the grammar corresponds to specific rewriting rules if the identified protocol is a specific protocol.

In an embodiment, the grammar corresponds to standard rewriting rules if the identified protocol is a standard protocol.

In an embodiment, a list of addresses from where packets classified as malicious are coming is stored in a database in order that further packets coming from an address of the list are parsed and rewritten without that the device executes a statistic inspection on them.

In an embodiment, the list of addresses is used later to prevent wasting the inspection time during a configurable time window.

In an embodiment, a given number of traffic packets classified as legitimate is selected to be parsed to identify a protocol and rewritten according to a grammar associated with the identified protocol, and a ratio is computed between the number of traffic packets that have been rewritten and said given number of traffic packets.

In an embodiment, the ratio is used later to assess the accuracy of the statistical inspection.

In an embodiment, the ratio is derived from comparisons between a set of original packets forming a message and a set of rewritten packets that are weighted based on the percentage of difference between rewritten packets and original packets.

In an embodiment, some comparisons between a set of original packets forming a message and a set of rewritten packets are weighted based on rewritten fields of the rewritten packets.

In an embodiment, some comparisons between a set of original packets forming a message and a set of rewritten packets are weighted based on the type of rewriting.

The invention also pertains to a device for traffic inspection in a telecommunication network, the device receiving traffic packets and executing a statistic inspection on the received traffic packets, the device comprising:
means for classifying the received traffic packets as malicious or legitimate after the statistic inspection,
means for parsing the traffic packets classified as malicious to identify a protocol associated with the traffic packets,
means for rewriting the traffic packets classified as malicious according to a grammar associated with the identified protocol.

The invention also pertains to a computer program capable of being implemented within a device, said program comprising instructions which, when the program is executed within said device, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a network traffic inspection; and
- FIG. 2 is an algorithm of a method for a traffic inspection in a telecommunication network according to one embodiment of the invention.

The same reference number represents the same element or the same type of element on all drawings.

### DESCRIPTION OF EMBODIMENTS

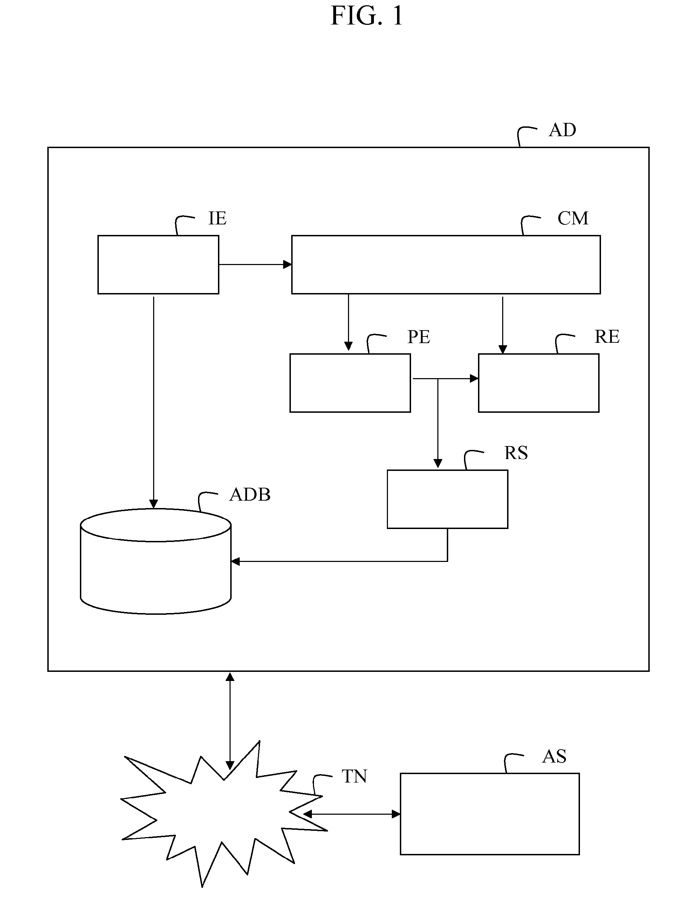

With reference to FIG. 1, a communication system according to the invention comprises a telecommunication network TN, an analysis device AD, and an application server AS.

The telecommunication network TN is for example an IP ("Internet Protocol") type high speed network such as the Internet or an intranet, or even a company specific private network.

As an introduction, a few terms and concepts that are helpful for understanding the invention are defined below.

A router is an information technology device in a communication network intended for routing data traffic. More particularly, the router controls the transmission of data traffic through the network and can determine the nearest network node to which a data packet should be sent so that the said packet will reach a predetermined target within the network as quickly as possible. For this purpose, the router has in its memory a routing table containing the shortest paths to other routers within the network as a function of metrics associated to such paths. In other words, a routing table is a table of matches between the network address of the targeted network location and the next node to which the router has to send the message.

The analysis device AD is able to perform a statistical inspection of network traffic to determine whether the network traffic is malicious or not. The network traffic is captured from a router connected to the analysis device.

In another embodiment, the analysis device AD may be included in the router from which the network traffic comes.

In one embodiment, the analysis device AD is placed between the router and the application server AS that can be any node in the telecommunication network including a Layer 2 device. For example, the application server is another router, or a server dedicated to a specific functionality, such as a SIP server or a HTTP server.

The analysis device AD comprises an inspection engine IE, a parsing engine PE, a rewriting engine RE, a rules selector RS and a comparison module CM.

In one variant, the inspection engine is not included in the analysis device but included in another device.

The inspection engine IE is able to analyze received packets without parsing them and without deep inspection. The inspection engine has inspection functionality such as a statistical inspection using learning techniques.

If the network traffic inspection result is that the traffic packets are not malicious, said packets are forwarded as such to the application server AS.

If the network traffic inspection result is that the traffic packets are malicious, said packets are forwarded as such to the parsing engine PE.

The parsing engine PE is able to identify the protocol type associated with the packets. For example, the protocol type is SIP or HTTP.

Following the parsing results, a selection of rewriting rules is executed by the rules selector RS, the rewriting rules corresponding to a grammar associated with the identified protocol. If a standard protocol is identified, such as a standard SIP protocol, the rules selector RS retrieves corresponding standard rules from a first database. If a specific protocol is identified, such as a vendor SIP protocol, the rules selector RS retrieves corresponding specific rules from a second database.

The two databases of rules can be filled offline with grammar information from standard documents and packets inspection.

Using different sets of valid messages skeletons is useful because protocols like SIP are prone to individual interpretation of standard documents by implementers, the rewriting engine may break some sessions with some of them if too restrictive or simply not interpreting the standard documents the exact same way.

Advantageously, at the parsing time, the SIP implementations are discriminated (using IDs of implementers inside the SIP messages) and trigger the appropriate set of specific rules for the rewriting engine if one exists, or the set of standard rules.

Broken sessions are typically identified with following SIP messages: if the remote party does not parse correctly the message and drop it, the initiator will send again the SIP initiations messages. This information can be used to qualify the impact of the rewriting engine RE and to adapt the restrictiveness accordingly by the parsing engine PE to trigger a different set of rules selected by the rules selector RS.

The rewriting engine RE rewrites the packets using the expected fields according to selected rules. Then the rewritten packets are forwarded to the next node, for example the application server.

At the statistical inspection stage, a list of the source IP addresses, from where packets detected as malicious are coming, can be stored in the addresses database ADB. This list of addresses can be used later to prevent wasting the inspection time during a configurable time window. During the configurable time window, if the inspection engine IE receives further packets coming from an address stored in the addresses database ADB, the inspection engine bypasses full inspection, and sends directly the packets to the parsing engine PE.

At a longer horizon, after the end of the configurable time window, the packets coming from an address stored in the database DB can be inspected again by the inspection engine, with a reviewed and modified inspection algorithm and/or parameters specifically for these packets.

The inspection engine and the rewriting engine may be dedicated to only protocols that are supported on the telecommunication network, such as HTTP and SIP. In case the inspection engine does not recognize the type of protocol, it can't forward the packets to the rewriting engine. In this case, depending on the configured policy, the inspection engine could drop them or give parameters, such as IP addresses and ports, to a firewall/router to drop them. To unveil malicious packets, the inspection engine could also analyze IP traffic for a given source IP address. Afterwards IP traffic is found, the inspection engine can send a request to a CAPTCHA module that would challenge the source of the packets to evaluate if there is a human behind the unknown protocol for instance.

The comparison module CM can be triggered in addition to the reaction strategy executed by the parsing engine and the rewriting engine, in order to evaluate the accuracy of the inspection engine IE.

The comparison module CM receives samples of the network traffic classified as legitimate after classification by the inspection engine, and forwards the packets corresponding to these samples to the parsing engine PE. These packets are rewritten by the rewriting engine RE the same way it was described previously for packets classified as malicious and sent back to the comparison module. This operation is done for a given quantity of packets and packets can be rewritten or not. If the packets are not rewritten, it means that they are legitimate, and if the packets are rewritten, it means that they are potentially malicious.

The comparison module CM takes as input the packets corresponding to the received samples, called the original packets, and the corresponding rewritten packets. The comparison module CM computes a ratio between the number of rewritten packets and the number of original packets. The ratio is useful to assess the accuracy of the statistical classifier of the inspection engine and can be used to plan updates for the statistical classifier if the ratio is considered high, meaning that some of the packets classified as "legitimate" are in fact "malicious".

In one embodiment, some or all comparisons between a set of original packets forming a message and a set of rewritten packets can be weighted based on the percentage of difference between rewritten packets and original packets, and/or based on rewritten fields of rewritten packets and/or based on the type of rewriting (e.g. field too long).

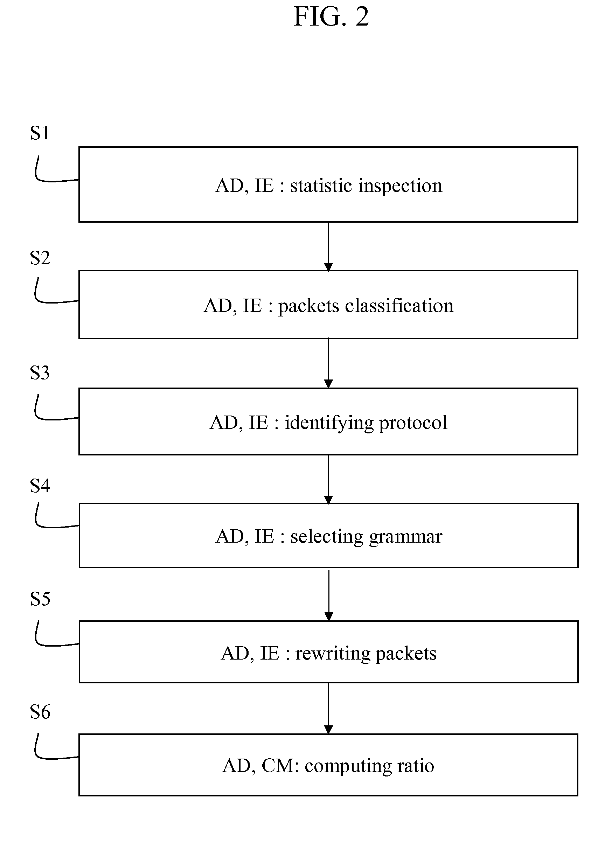

With reference to FIG. 2, a method for a traffic inspection in a telecommunication network according to one embodiment of the invention comprises steps S1 to S6 executed within the communication system.

I n step S1, the inspection engine IE of the analysis device AD receives traffic packets and executes a statistic inspection on the traffic packets. This inspection may be about "meta data" such as the size of the packets or the direction. It may also be about performance oriented parsing using Support Vector Machines that are supervised learning models with associated learning algorithms that analyze data and recognize patterns, used for classification.

In step S2, the inspection engine IE classifies the traffic packets as malicious or legitimate.

If traffic packets are legitimate, said packets are forwarded as such to the application server AS.

If traffic packets are malicious, said packets are forwarded as such to the parsing engine PE.

In step S3, the parsing engine PE parses the traffic packets classified as malicious to identify a protocol associated with the traffic packets.

In step S4, the rules selector RS selects a grammar associated with the identified protocol. If the identified protocol is a standard protocol, the grammar corresponds to standard rewriting rules. If the identified protocol is a specific protocol, the grammar corresponds to specific rewriting rules. Thus, the grammar is selected according to the type of the identified protocol.

In step S5, the rewriting engine RE rewrites the traffic packets classified as malicious according to the selected grammar associated with identified protocol.

In the optional step S6, the comparison module CM selects a given number of traffic packets classified as legitimate that are then parsed to identify a protocol and rewritten according to a grammar associated with the identified protocol. The comparison module CM computes a ratio between the number of traffic packets that have been rewritten and the original selected given number of traffic packets. The ratio can then be used to assess the accuracy of the statistical classifier of the inspection engine.

In one example, the protocol that is inspected and rewritten is the SIP protocol, a signaling protocol used for media sessions in telecommunications. This protocol relies on several server functions such as SIP-proxy and SIP-router that may be combined on the same box or not. A Session Border Controller (SBC) is typically deployed in front of the SIP servers to protect them from attacks.

The analysis device could be incorporated into the SBC appliance for example. SIP traffic routed via the IP networks to the SIP servers goes transparently through the SBC that can host at the same time:
(i) the inspection engine IE inspecting the SIP messages. SIP messages classified as malicious are forwarded to the rewriting engine RE.
(ii) the parsing engine PE parsing the original message in order to
   a. list the occurrence of each field,
   b. extract from the original packet the inputs of each field,
   c. extract from the original packet vendors identifiers if any such as the User-Agent name.
(iii) the rules selector RS using the message type and the vendor type, results from the parsing, to select an appropriate pre-filled database of well-known SIP messages skeletons corresponding to each SIP message defined by the IETF RFCs such as SIP REGISTER, SIP INVITE, SIP ACK, SIP OPTIONS...
(iv) the rewriting engine RE rewriting the SIP fields such as From, To, Via, Options according to the standard described in the relevant databases (corresponding IETF RFCs and implementations). The rewriting engine:
   a. converts the inputs against the expected Types,
   b. if required, trunks against maximum Lengths (parameters),
   c. limits duplication of fields,
   d. forges the completely new SIP message.

In another example, the protocol that is inspected and rewritten is an interactive protocol such as HTTP. In front of the Web servers, the security architecture is composed of optional load-balancers and web proxies.

The analysis device could be incorporated into the load-balancers or web proxies appliances. HTTP traffic routed via the IP networks to the Web servers goes transparently through the load-balancers or web proxies that would host at the same time:
(i) the inspection engine IE inspecting the HTTP messages. HTTP messages classified as malicious are forwarded to the rewriting engine.
(ii) the parsing engine PE parsing the original message to a. extract from the original packet the inputs of each field,
(iii) the rules selector RS using the message type and the vendor type, results from the parsing, to select the appropriate pre-filled database of well-known HTTP messages skeletons corresponding to each HTTP message defined by the W3C references such as HTTP GET, HTTP POST, HTTP OPTIONS...
(v) the rewriting engine RE rewriting the HTTP headers such as Referer, Cookie, Host, Accept according to the standard described in the relevant databases (corresponding IETF RFCs and implementations). The rewriting engine:
   a. either removes systematically inputs with active content such as Javascript, Medias, or makes a lookup itself to the media reference from another trusted database to convert the original media links to new ones or rewrite with a set of valid characters all the inputs,
   b. forges the completely new HTTP packet.

The invention described here relates to a method and a device for a traffic inspection in a telecommunication network. According to one implementation of the invention, the steps of the invention are determined by the instructions of a computer program incorporated into a device, such as the analysis device. The program comprises program instructions which, when said program is loaded and executed within the device, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for traffic inspection in a telecommunication network (TN), a device (AD) receiving traffic packets and executing a statistic inspection on the received traffic packets, comprising the following steps in said device:
classifying (S2) the received traffic packets as malicious or legitimate after the statistic inspection,
parsing (S3) the traffic packets classified as malicious to identify a protocol associated with the traffic packets,
rewriting (S5) the traffic packets classified as malicious according to a grammar associated with identified protocol.

2. A method according to claim 1, whereby the grammar is selected according to the type of the identified protocol.

3. A method according to claim 2, whereby the grammar corresponds to specific rewriting rules if the identified protocol is a specific protocol.

4. A method according to claim 2, whereby the grammar corresponds to standard rewriting rules if the identified protocol is a standard protocol.

5. A method according to any of claims 1 to 4, whereby a list of addresses from where packets classified as malicious are coming is stored in a database (ADB) in order that further packets coming from an address of the list are parsed and rewritten without that the device (AD) executes a statistic inspection on them.

6. A method according to claim 5, whereby the list of addresses is used later to prevent wasting the inspection time during a configurable time window.

7. A method according to any of claims 1 to 6, whereby a given number of traffic packets classified as legitimate is selected to be parsed to identify a protocol and rewritten according to a grammar associated with the identified protocol, and a ratio is computed between the number of traffic packets that have been rewritten and said given number of traffic packets.

8. A method according to claim 7, whereby the ratio is used later to assess the accuracy of the statistical inspection.

9. A method according to claims 7 or 8, whereby the ratio is derived from comparisons between a set of original packets forming a message and a set of rewritten packets that are weighted based on the percentage of difference between rewritten packets and original packets.

10. A method according to claim 9, whereby some comparisons between a set of original packets forming a message and a set of rewritten packets are weighted based on rewritten fields of the rewritten packets.

11. A method according to claim 9 or 10, whereby some comparisons between a set of original packets forming a message and a set of rewritten packets are weighted based on the type of rewriting.

12. A device (AD) for traffic inspection in a telecommunication network (TN), the device receiving traffic packets and executing a statistic inspection on the received traffic packets, the device comprising:
means (IE) for classifying the received traffic packets as malicious or legitimate after the statistic inspection,
means (PE) for parsing the traffic packets classified as malicious to identify a protocol associated with the traffic packets,
means (RE) for rewriting the traffic packets classified as malicious according to a grammar associated with the identified protocol.

13. A computer program capable of being implemented within a device for traffic inspection in a telecommunication network (TN), a device (AD) receiving traffic packets and executing a statistic inspection on the received traffic packets, said program comprising instructions which, when the program is loaded and executed within said device, carry out the following steps:
classifying (S2) the received traffic packets as malicious or legitimate after the statistic inspection,
parsing (S3) the traffic packets classified as malicious to identify a protocol associated with the traffic packets,
rewriting (S5) the traffic packets classified as malicious according to a grammar associated with the identified protocol.
